# EUROPÄISCHE PATENTANMELDUNG

(11) **EP 1 174 700 A1**
(43) Veröffentlichungstag der Anmeldung: **23.01.2002**
(21) Anmeldenummer: 00115388.1
(22) Anmeldetag: 17.07.2000
(51) Int. Cl.: G01M 11/06

(54) **Verfahren zur Festlegung der Lage eines Übergangsbereichs einer optischen Linie im Leuchtbild eines KFZ-Scheinwerfers**

(71) Anmelder: Brunk, Wolfgang, 37130 Gleichen Wöllmarshausen (DE)
(72) Erfinder: Brunk, Wolfgang, 37130 Gleichen Wöllmarshausen (DE)
(74) Vertreter: Patentanwälte Rehberg + Hüppe

(57) **Zusammenfassung**

Bei einem Verfahren zur Festlegung der Lage eines Übergangsbereichs in einem Leuchtbild eines KFZ-Scheinwerfers wird eine vertikale Position einer optischen Linie in dem Leuchtbild zweimal hintereinander nach ihrer horizontalen Position abgeleitet, wobei die optische Linie und/oder die erste Ableitung geglättet wird. Dann wird die horizontale Position eines Maximums der zweiten Ableitung bestimmt und als horizontale Lage des Übergangsbereichs ausgegeben.

## Beschreibung

Die Erfindung bezieht sich auf ein Verfahren zur Festlegung der Lage eines Übergangsbereichs einer optischen Linie in einem Leuchtbild eines KFZ-Scheinwerfers, insbesondere der Lage eines Knickpunkts einer Hell-Dunkel-Grenze eines KFZ-Scheinwerfers nach europäischer Norm. Die Erfindung befaßt sich aber auch mit der Festlegung der Lage eines Sprungpunkts einer Hell-Dunkel-Grenze bei einem VOR- bzw. VOL-KFZ-Scheinwerfer nach US-Norm.

Ein idealer KFZ-Scheinwerfer nach europäischer Norm weist in seinem Leuchtbild eine Hell-Dunkel-Grenze auf, die ihrerseits einen waagerechten Bereich und einen daran anschließenden nach oben schräg ansteigenden Bereich aufweist. Bei einem Scheinwerfer für den Rechtsverkehr schließt der ansteigende Bereich rechts an den waagerechten Bereich an. Bei einem Scheinwerfer für den Linksverkehr ist es umgekehrt. Bei einem KFZ-Scheinwerfer nach US-Norm weist die Hell-Dunkel-Grenze einen vertikalen Sprung zwischen zwei waagerechten Bereichen auf. In jedem Fall wird der Übergangsbereich zwischen den beiden Bereichen der Hell-Dunkel-Grenze, d. h. zwischen dem waagerechten und dem ansteigenden Bereich bei KFZ-Scheinwerfer nach europäischer Norm bzw. den beiden waagerechten Bereichen bei KFZ-Scheinwerfern nach US-Norm verwendet, um die Ausrichtung der Scheinwerfer zur Fahrzeuglängsachse eines Kraftfahrzeugs zu definieren und einzustellen.

In der Praxis, d. h. bei realen KFZ-Scheinwerfern erweist es sich als schwierig, absolute Kriterien für die Lage des jeweiligen Übergangsbereichs so zu definieren, daß die Lage mit deren Hilfe eindeutig und damit auch automatisch ermittelt werden kann. So weisen reale KFZ-Scheinwerfer nach europäischer Norm einen Verlauf der Hell-Dunkel-Grenze auf, der nicht nur aus zwei geraden Abschnitten besteht. Vielmehr kann es verschiedene unterschiedlich stark gekrümmte, ineinander übergehende Bereiche geben. Häufig ist daher die Festlegung individueller Kriterien für die Lage des Knickpunkts in Bezug auf den einzelnen KFZ-Scheinwerfer notwendig, um diese Lage zur Fahrzeuglängsachse reproduzierbar ermitteln zu können. Dies steht nicht nur dem problemlosen Verbau unterschiedlicher KFZ-Scheinwerfer Fabrikaten in einer KFZ-Produktionslinie mit einem einzigen Einstellstand für die KFZ-Scheinwerfer entgegen. Es bedeutet auch, daß bei der Umstellung auf jedes neue KFZ-Scheinwerferfabrikat zunächst eine Definition der Kriterien für die Lage des Knickpunkts der Hell-Dunkel-Grenze erfolgen und hieran die Bildverarbeitung des KFZ-Scheinwerfereinstellstands angepaßt werden muß. Für KFZ-Werkstätten ist es völlig unmöglich, bei den vielen verschiedenen auftretenden KFZ-Scheinwerfern den einzelnen Scheinwerfertyp im einzelnen zu berücksichtigen, um über individuell festgelegte Kriterien für die Lage des Knickpunkts die Ausrichtung des KFZ-Scheinwerfers zur Fahrzeuglängsachse zu überprüfen. Entsprechend erfolgt eine diesbezügliche Überprüfung bzw. Einstellung häufig nur nach Augenmaß.

Grundsätzlich gleich verhält es sich bei Scheinwerfern nach US-Norm. Auch hier ist häufig keine scharfe Stufe der Hell-Dunkel-Grenze zwischen zwei wirklich waagerechten Bereichen vorhanden.

Aus der EP 0 458 586 B1 ist es bekannt, den Knickpunkt der Hell-Dunkel-Grenze eines KFZ-Scheinwerfers nach europäischer Norm dadurch zu ermitteln, daß zunächst solche Punkte der Hell-Dunkel-Grenze, die sich nahe des hellsten Flecks des Leuchtbilds des KFZ-Scheinwerfers befinden, ausgeklammert werden und daß dann durch die dem hellsten Fleck beiderseits benachbarten Punkte der Hell-Dunkel-Grenze zwei Ausgleichsgeraden berechnet werden. Der Schnittpunkt dieser berechneten Ausgleichsgeraden wird dann als Lage des Knickpunkt der Hell-Dunkel-Grenze definiert. Hierdurch wird zwar eine gewisse Unabhängigkeit von dem Verlauf der Hell-Dunkel-Grenze in der Nähe des hellsten Flecks des Leuchtbilds des KFZ-Scheinwerfers erreicht, insbesondere bei einer Krümmung der im Idealfall waagerechten und ansteigenden Bereiche der Hell-Dunkel-Grenze ergibt das bekannte Verfahren aber zum Teil völlig unsinnige Lagen für den Knickpunkt der Hell-Dunkel-Grenze abseits deren tatsächlichen Verlaufs.

Der Erfindung liegt daher die Aufgabe zugrunde, ein Verfahren der eingangs beschriebenen Art aufzuzeigen, mit dem eine vom jeweiligen Typ des KFZ-Scheinwerfers weitestgehend unabhängige Festlegung der Lage des Übergangsbereichs der optischen Linie möglich ist.

Erfindungsgemäß wird diese Aufgabe dadurch gelöst, daß die vertikale Position der optischen Linie in dem Leuchtbild zweimal hintereinander nach ihrer horizontalen Position abgeleitet wird, wobei die optische Linie und/oder die erste Ableitung geglättet wird, und wobei die horizontale Position eines Maximums der zweiten Ableitung bestimmt und als horizontale Lage des interessierenden Übergangsbereichs ausgegeben wird.

Die vertikale Lage des interessierenden Übergangsbereichs kann, falls gewünscht, auf einfache Weise zusätzlich ermittelt werden, indem beispielsweise bei einem Scheinwerfer nach europäischer Norm die mittlere vertikale Lage der Hell-Dunkel-Grenze in dem Übergangsbereich ausgegeben wird oder indem bei einem KFZ-Scheinwerfer nach US-Norm des Typs VOR die vertikale Lage des angrenzenden rechten Bereichs der Hell-Dunkel-Grenze ausgegeben wird bzw. bei einem VOL-Typ die vertikale Lage des angrenzenden linken Bereichs der Hell-Dunkel-Grenze.

Es hat sich herausgestellt, daß das erfindungsgemäße Verfahren bei unterschiedlichsten Typen von KFZ-Scheinwerfern und dabei auch bei solchen, die eine automatisierte Festlegung der Lage des Knickpunkts der Hell-Dunkel-Grenze mit bekannten Verfahren nicht oder nur über ganz spezielle individuelle Kriterien erlaubten, zu eindeutigen und reproduzierbaren Ergebnissen führt. Eine mindestens einmalige, besser zweimalige Glättung der optischen Linie bzw. ihrer ersten Ableitung ist dabei erforderlich, um die Streuung der Bildpunkte der optischen Linie auszugleichen. Ansonsten ist das neue Verfahren aber bereits an sich sehr unempfindlich gegenüber etwaigen Störeinflüssen.

Die Umsetzung des neuen Verfahrens kann auf unterschiedliche Weise erfolgen. So kann das neue Verfahren beispielsweise durch analoge Elektronik umgesetzt werden, indem ein elektrisches Eingangssignal, dessen Spannungsverlauf über der Zeit dem Verlauf der vertikalen Position der optischen Linie über einer fortschreitenden horizontalen Position in dem Leuchtbild entspricht, mit analogen Differenziermitteln zweimal nach der Zeit abgeleitet wird, so daß sich ein Differenzsignal ergibt, dessen Spannungsverlauf über der Zeit dem Verlauf einer mittleren zweiten Ableitung der optischen Linie über der fortschreitenden horizontalen Position in dem Leuchtbild entspricht, und indem die zeitliche Lage eines Maximums des Differenzsignals einer konkreten horizontalen Position dieses Maximum in dem Leuchtbild zugeordnet wird.

Dabei kann der Aufbau der analogen Schaltung im Detail an denjenigen angelehnt sein, wie er aus der DE 42 12 066 A1 bekannt ist, die sich mit den Problemen der Ermittlung des Verlaufs der Hell-Dunkel-Grenze in einem Leuchtbild eines KFZ-Scheinwerfers beschäftigt, wozu das Maximum einer mittleren ersten Ableitung über die Lichtintensität in dem Leuchtbild entlang von vertikal ausgerichteten Bildzeilen und dessen Lage innerhalb der Zeile bestimmt wird. Es ist eigentlich nur darauf zu achten, daß bei dem neuen Verfahren mit den analogen Differenziermitteln zweimal nach der Zeit abgeleitet wird.

Eine digitale Umsetzung des neuen Verfahren kann beispielsweise dadurch erfolgen, daß aus n Zahlen, die jeweils einer von n benachbarten horizontalen Positionen in dem Leuchtbild zugeordnet sind und deren Wert jeweils eine zu der horizontalen Position zugehörigen vertikalen Position der optischen Linie in dem Leuchtbild entspricht, n+1-m erste Steigungszahlen als mittlere Steigungen von jeweils m Zahlen, die benachbarten Positionen in dem Leuchtbild zugeordnet sind, ermittelt werden, wobei aus den n+1-m ersten Steigungszahlen n+2-m-l zweite Steigungszahlen als mittlere Steigungen von jeweils l ersten Steigungszahlen, die benachbarten Positionen in dem Leuchtbild zugeordnet sind, ermittelt werden, wobei die n+2-m-l zweiten Steigungszahlen zu n+2-m-l benachbarten horizontalen Positionen in dem Leuchtbild zugeordnet werden und wobei eine zu einem Maximalwert der zweiten Steigungszahlen zugehörige horizontale Position in dem Leuchtbild ermittelt wird.

Diese Ermittlung der jeweiligen Steigungszahlen entspricht einer numerischen Ableitung mit gleichzeitiger Mittelung. Der zugrundeliegende Algorithmus kann derjenige einer linearen Regression unter Berücksichtigung von jeweils m bzw. l Punkten sein.

Vorzugsweise werden die zweiten Steigungszahlen jeweils der mittleren horizontalen Position der zugrundeliegenden Zahlen zugeordnet. Dies ist besonders einfach, wenn m und l ungerade sind, so daß die mittlere horizontale Position in der Gruppe mit einer der Positionen der Gruppe zusammenfällt.

Die Anzahl m bzw. l der der jeweiligen numerischen Ableitung zugrundeliegenden Zahlen bzw. ersten Steigungszahlen bestimmen die Größe der Bereiche, über die während der Bildung der ersten und zweiten Ableitung in Form der Berechnung der Steigungszahlen gemittelt wird. Eine gewisse Mittelung ist erforderlich. Vorzugsweise sollte aber die horizontale Erstreckung der Mittelung nicht größer sein als diejenige der Bereiche, die die Lage des Übergangsbereichs definieren. Typischerweise erweist sich eine Obergrenze für m und l in Höhe von 15 % von n als sinnvoll. Die Untergrenze liegt bei etwa 3 %. Diese Werte sind aber stark von n, d.h. der Auflösung der Wiedergabe der optischen Linie durch die n Zahlen, abhängig.

Bei einer bevorzugten konkreten Ausführungsform des neuen Verfahrens werden zum Ermitteln einer ersten ersten und/oder zweiten Steigungszahl die m Zahlen bzw. die l ersten Steigungszahlen, die m bzw. l benachbarten Positionen an einem Rand des Leuchtbilds zugeordnet sind, in einen Ringbuffer mit m bzw. l Plätzen eingelesen, wobei dann zur Ermittlung einer weiteren ersten bzw. zweiten Steigungszahl, deren zugehörige horizontale Position derjenigen der ersten bzw. zweiten Steigungszahl benachbart ist, eine nächste Zahl bzw. erste Steigungszahl neu in den Ringbuffer eingelesen und die damit herausfallende Zahl bzw. erste Steigungszahl ausgelesen wird.

Beim Einlesen der nächsten Zahl bzw. Steigungszahl in den Ringbuffer sind gleichzeitig im Fall einer linearen Regression als Ableitungsalgorithmus alle von der nächsten Zahl abhängigen Summanden der neuen Steigungszahl zu bilden und hinzuzufügen bzw. alle Summanden der herausfallenden Zahl zu entfernen (subtrahieren), wozu sie auch neu gebildet werden können.

Die zu dem Maximalwert der zweiten Steigungszahl zugehörige horizontale Position in dem Leuchtbild kann ermittelt werden, indem der absolute Maximalwert der zweiten Steigungszahlen ermittelt und dann um einen vorgegebenen Prozentsatz reduziert wird und indem die mittlere horizontale Position der beiden zweiten Steigungszahlen ermittelt wird, die in der Folge der zweiten Steigungszahlen den reduzierten Maximalwert aufeinanderfolgend über- und unterschreiten. Dieses Verfahren stellt sich als viel stabiler heraus, als die Suche nur nach der Position des absoluten Maximalwerts der zweiten Steigungszahlen, was bei Berücksichtigung einer gewissen Streuung der zweiten Steigungszahlen und einem flachen Maximum ohne weiteres nachzuvollziehen ist.

Bei mehreren lokalen Maximalwerten der zweiten Steigungszahlen kann immer die zu dem lokalen Maximalwert zugehörige horizontale Position ausgegeben werden, der entweder bei einem KFZ-Scheinwerfer für den Rechtsverkehr am weitestens rechts bzw. bei einem KFZ-Scheinwerfer für den Linksverkehr am weitesten links liegt oder der größte lokale Maximalwert ist oder der am nächsten am hellsten Punkt des Leuchtbilds liegt. Eine Mehrzahl von lokalen Maximalwerten der zweiten Steigungszahlen kann z. B. dadurch ermittelt werden, daß der prozentual abgeschwächte absolute Maximalwert der zweiten Steigungszahlen an mehreren Stellen aufeinanderfolgend über- und unterschritten wird. Es kann aber auch mit anderen Algorithmen gezielt nach mehren lokalen Maxima gesucht werden. Für den Fall, daß eine solche Mehrzahl von lokalen Maxima auftritt, entscheidet das neue Verfahren nach einmaliger Festlegung zukünftig selbstätig, welcher dieser lokalen Maximalwerte als horizontale Lage des interessierenden Übergangsbereichs ausgegeben wird.

Die Umsetzung der digitalen Ausführungsform des neuen Verfahrens kann in einfacher Weise mit Hilfe eines handelsüblichen digitalen Signalprozessors (DSP) erfolgen, wie er beispielsweise in Waschmaschinen und anderen Haushaltsgeräten zur Motorsteuerung verwendet wird. Die Grundfunktionen eines DSP sind zur Bewältigung der notwendigen Verfahrensschritte bestens geeignet. Insbesondere die Fähigkeit eines DSP zur kombinierten Multiplikation und Akkumulation ist bei der Durchführung der linearen Regressionen für die Ermittlung der beiden Ableitungen von Vorteil. Die Ausgabe der Position des gesuchten Übergangsbereichs kann bei einem DSP über dessen übliche pulsbreitenmodulierte Ausgänge erfolgen, wenn an diese eine integrierende Anzeige, beispielsweise ein herkömmliches Voltmeter angeschlossen ist. Für die Anzeige von Höhe und Seite des Übergangsbereichs werden zwei der üblichen drei Ausgänge eines DSP in dieser Weise genutzt.

Die Erfindung wird im Folgenden anhand von Ausführungsbeispielen näher erläutert und beschrieben, dabei zeigt:
- Figur 1: die mathematische Grundlage des neuen Verfahrens,
- Figur 2: ein Ablaufdiagramm zu einer ersten Ausführungsform des neuen Verfahrens,
- Figur 3: Darstellungen von Zwischenergebnissen und des Endergebnisses bei Anwendung des neuen Verfahrens auf einen ersten KFZ-Scheinwerfer,
- Figur 4: Darstellungen von Zwischenergebnissen und des Endergebnisses bei Anwendung des neuen Verfahrens auf einen zweiten KFZ-Scheinwerfer,
- Figur 5: Darstellungen von Zwischenergebnissen und des Endergebnisses bei Anwendung des neuen Verfahrens in einer gegenüber Figur 4 abgewandelten Ausführungsform auf denselben KFZ-Scheinwerfer wie bei Figur 4 und
- Figur 6: ein Ablaufdiagramm zu einer alternativen Ausführungsform des neuen Verfahrens.

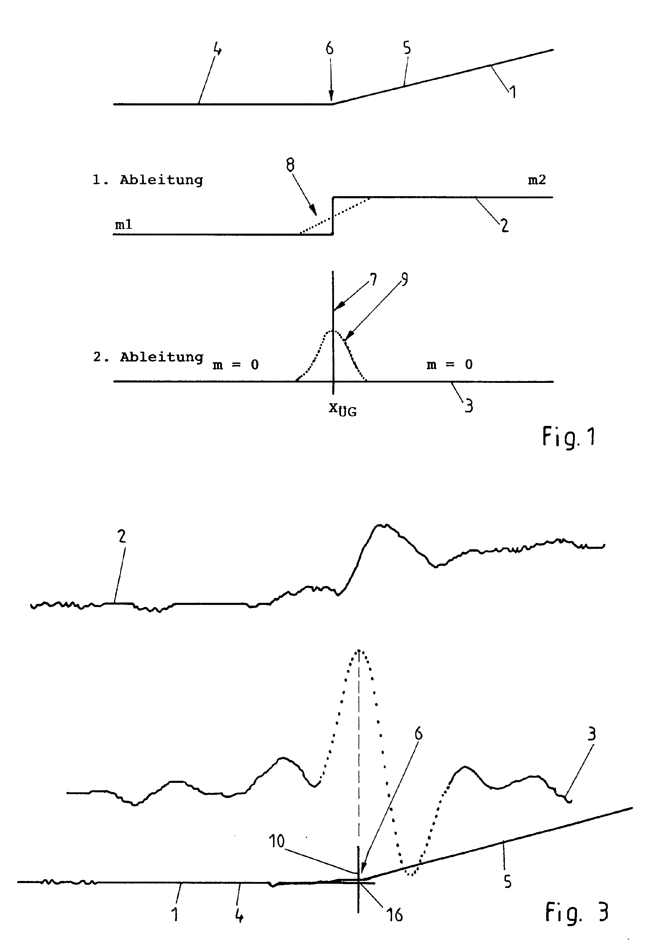

In Figur 1 ist oben der Verlauf einer Hell-Dunkel-Grenze 1 eines idealen KFZ-Scheinwerfers nach europäischer Norm dargestellt. Darunter, in der Mitte von Figur 1 ist die erste Ableitung 2 der vertikalen Y-Koordinate der Hell-Dunkel-Grenze 1 nach der horizontalen X-Koordinate dargestellt. Ganz unten ist die zugehörige zweite Ableitung 3 wiedergegeben. Der Verlauf der Hell-Dunkel-Grenze 1 weist in dem dargestellten Idealfall eines Scheinwerfers für den Rechtsverkehr links einen waagerecht verlaufenden Bereich 4 und rechts daran anschließend einen konstant ansteigenden Bereich 5 auf. Dazwischen befindet sich ein Übergangsbereich 6, der auch als Knickpunkt bezeichnet wird. Für die Ausrichtung eines KFZ-Scheinwerfers zu der Längsachse des zugehörigen Kraftfahrzeugs kommt es auf die Winkellage des Knickpunkts 6 zu der Fahrzeuglängsachse an. Entsprechend muß zunächst einmal die Lage des Knickpunkts 6 ermittelt werden. Die horizontale Position des Knickpunkts 6 kann durch die Suche nach dem Maximum der zweiten Ableitung der vertikalen Y-Koordinate der Hell-Dunkel-Grenze 1 nach ihrer horizontalen X-Koordinate bestimmt werden. Bei der in Figur 1 dargestellten Hell-Dunkel-Grenze 1 eines idealen Scheinwerfers weist die zweite Ableitung am Knickpunkt sogar eine Singularität 7 auf. Selbst wenn eine numerische Form der Ableitung zugrunde gelegt wird, was in Figur 1 Mitte und unten durch einen gestrichelten Verlauf im Übergangsbereich 6 angedeutet ist, weist die erste Ableitung nur in dem Übergangsbereich 6 zwischen einem ersten konstanten Wert m1 (idealer Weise gleich null) und einem zweiten konstanten Wert m2 eine Steigung 8 auf. Bei der zweiten Ableitung ergibt sich für die Bereiche 4 und 5 jeweils ein Wert m = 0, der nur in dem Übergangsbereich 6 lokal ansteigt und dort ein Maximum 9 ausbildet. Die Lage X_{ÜG} dieses Maximums ist die horizontale X-Koordinate des Übergangsbereichs 6. Überraschenderweise hat sich nun herausgestellt, daß die Lage des Knickpunkts einer Hell-Dunkel-Grenze eines KFZ-Scheinwerfers auch dann nach dem in Figur 1 skizzierten Prinzip ermittelbar ist, wenn die Hell-Dunkel-Grenze 1 im Leuchtbild des KFZ-Scheinwerfers keinesfalls den idealen Verlauf gemäß Figur 1 aufweist. Auch der Sprungbereich zwischen den beiden horizontalen Bereichen der Hell-Dunkel-Grenze im Leuchtbild eines KFZ-Scheinwerfers nach US-Norm (VOR oder VOL) läßt sich auf genau dieselbe Weise bezüglich der horizontalen X-Koordinate reproduzierbar festlegen, obwohl der ideale Verlauf der Hell-Dunkel-Grenze bei einem Scheinwerfer nach US-Norm bereits der 1. Ableitung gemäß Figur 1 entsprechen sollte. In der Praxis ist aber nur bei wenigen realen Scheinwerfern nach US-Norm möglich, das neue Verfahren so abzuändern, daß nur eine Ableitung der Hell-Dunkel-Grenze vorgenommen wird und dennoch stabile Ergebnisse bezüglich der Lage deren Sprungpunkts erhalten werden. Die gewünschten stabilen Ergebnisse ergeben sich hingegen bei unveränderter Durchführung des neuen, theoretisch für Scheinwerfer nach europäischer Norm optimierten Verfahrens auch in Bezug auf Scheinwerfer nch US-Norm. Nur bei der vertikalen Y-Koordinate muß zwischen den Scheinwerfern nach US-Norm bzw. europäischer Norm unterschieden werden. Während die Y-Koordinate für einen KFZ-Scheinwerfer nach europäischer Norm beispielsweise aus dem Mittelwert der Y-Koordinate der Hell-Dunkel-Grenze 1 in dem Übergangsbereich 6 bestimmt werden kann, ist für einen Scheinwerfer nach US-Norm auf die vertikale Position des durch die Festlegung VOR bzw. VOL vorgegebenen recht bzw. links angrenzenden Bereich der Hell-Dunkel-Grenze abzustellen.

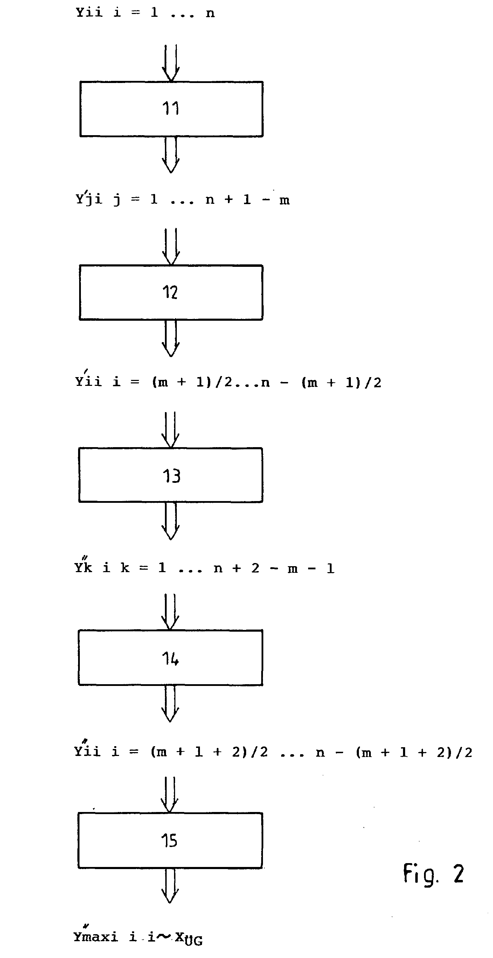

Das Ablaufdiagramm gemäß Figur 2 skizziert den Ablauf einer ersten Ausführungsform des neuen Verfahrens zur Festlegung der X-Koordinate der Hell-Dunkel-Grenze als optische Linie im Leuchtbild eines KFZ-Scheinwerfers, bei dem eine zweifache numerische Ableitung der Y-Koordinate der Hell-Dunkel-Grenze nach deren X-Koordinate erfolgt. Die sich hierbei automatisch einstellende Glättung wird bei dem neuen Verfahren gezielt ausgenutzt, um Ortsschwankungen in der ermittelten vertikalen Position der Hell-Dunkel-Grenze zu glätten. Ausgegangen wird von einer Zahlenfolge Yᵢ wobei i von 1 bis n läuft und wobei Yᵢ die vertikale Position der Hell-Dunkel-Grenze in einer von n benachbarten horizontalen Positionen in dem Leuchtbild des KFZ-Scheinwerfers wiedergibt. Auch im Folgenden wird der Index i immmer in der Bedeutung einer bestimmten, vom Rand gesehenen und daher absolute horizontale Position in dem Leuchtbild des KFZ-Scheinwerfers verwendet, während andere Indices auf einen anderen Aufpunkt als den unmittelbaren Rand des Leuchtbilds verweisen. Die Zahlenfolge Yᵢ wird in einem ersten Schritt 11 numerisch abgeleitet. Hierzu wird zunächst zu den ersten n Zahlen Y₁ bis Yₘ eine lineare Regression durchgeführt. Hieraus ergibt sich eine Steigungszahl Y'₁. Zur konkreten Durchführung der linearen Regression werden die ersten Zahlen Y₁ bis Yₘ in einen Ringbuffer eingelesen. Dabei werden für jede Zahl die für die Summenbildungen im Rahmen der linearen Regression notwendigen Summanden bestimmt. Als nächstes wird dann eine Steigungszahl Y'₂ aus den Zahlen Y₂ bis Yₘ₊₁ bestimmt. Hierzu wird die Zahl Yₘ₊₁ in den Ringbuffer eingelesen und es werden die entsprechenden Summanden für die Summen der linearen Regression bestimmt. Gleichzeitig wird die Zahl Y₁ aus dem Ringbuffer ausgelesen, und die entsprechenden Summanden werden aus den Summen für die lineare Regression entfernt. Diese Schritte wiederholen sich n+1-m-mal bis alle Zahlen Y₁ bis Yₙ verarbeitet sind. Hieraus ergibt sich eine Zahlenfolge Y'ₖ mit k = 1 bis n+1-m. Diese Steigungszahlen werden in einem zweiten Schritt 12 den jeweils mittleren Positionen innerhalb der Gruppe von m-Zahlen, zu denen die lineare Regression durchgeführt wurde, zugeordnet. Hieraus ergibt sich eine Zahlenfolge Y'ᵢ mit i = (m+1)/2 bis n-(m+1)/2. Hierbei ist davon ausgegangen, daß m eine ungerade Zahl ist, so daß auch (m+1)/2 eine ganze Zahl ist. Die resultierende Zahlenfolge wird in einem dritten Schritt 13 erneut numerisch abgeleitet. Der Ablauf im Einzelnen entspricht dabei genau dem ersten Schritt 11. Der Ringbuffer kann aber eine von m abweichende Größe l aufweisen, d. h. die lineare Regression wird immer für l Punkte durchgeführt, die benachbarten horizontalen Positionen zugeordnet sind. Aus dem Schritt 13 ergibt sich eine Zahlenfolge Y"ₖ mit k=1 bis n+2-m-l. Diese Folge wird in einem Schritt 14 den horizontalen Positionen zugeordnet, die den Indices i von (m+l+2)/2 bis n-(m+l+2)/2 entsprechen, wobei l der Einfachheit halber wieder eine ungerade Zahl ist. Da sich der Schritt 12 nicht auf den nachfolgenden Schritt 13 direkt auswirkt, kann auf diesen auch ganz verzichtet werden, wodurch aber die Zahlenfolge Y' keine nachvollziehbare Zuordnung zur X-Koordinate der Hell-Dunkel-Grenze 1 gemäß Figur 1 aufweist, außer, daß der zunehmende Index auf eine in proportionalem Umfang anwachsende X-Koordinate hinweist. Der Schritt 14 ist hingegen notwendig, damit die Zahlenfolge Y"ᵢ in Bezug auf die X-Koordinate der Hell-Dunkel-Grenze 1 gemäß Figur 1 auswertbar ist. Konkret wird zu der Zahlenfolge Y"ᵢ das Maximum Y"maxᵢ ermittelt. Dies erfolgt in dem fünften Schritt 15. Der Schritt 15 umfaßt auch die Zuordnung einer bestimmten X-Koordinate X_{ÜG} zu Y"maxᵢ, die der X-Koordinate des gesuchten Übergangsbereichs 6 gemäß Figur 1 entspricht. Dabei muß X_{ÜG} nicht direkt dem Index i des tatsächlich maximalen Werts von Y"ᵢ entsprechen. Ein stabileres Ergebnis wird bei dem Verfahren gemäß Figur 2 erreicht, wenn stattdessen nach dem mittleren Index von zwei Werten Y"ᵢ gesucht wird, mit denen die Zahlenfolge Y" den um einen festen Prozentsatz abgeschwächten Maximalwert Y"max erstmalig überschreitet bzw. unterschreitet.

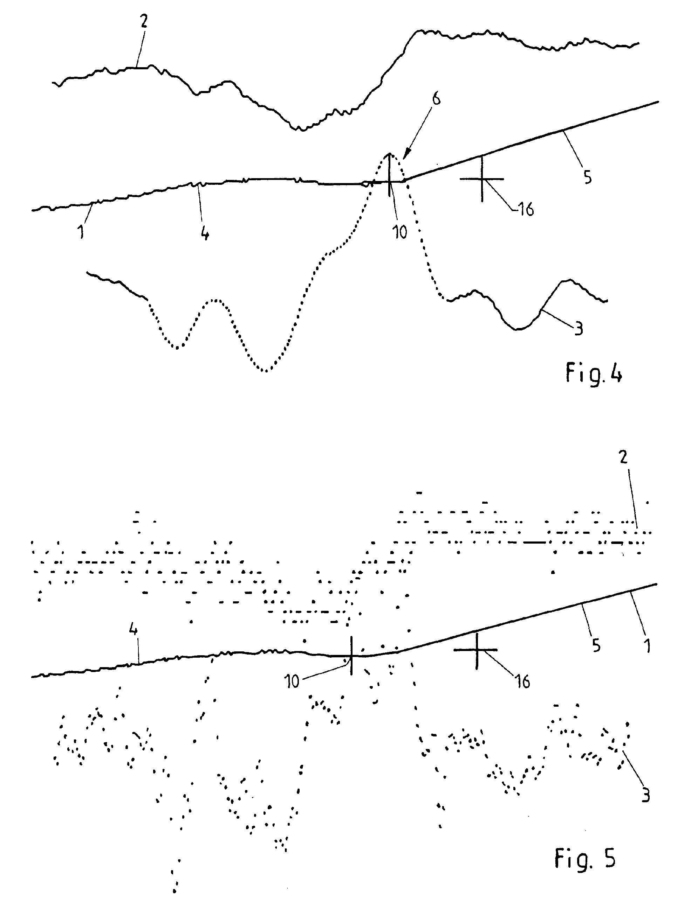

Figur 3 illustriert das Verfahren gemäß Figur 2 anhand des Verlaufs einer realen Hell-Dunkel-Grenze 1 in Form einer Zahlenfolge Yᵢ mit i=1 bis 280. Ganz oben in Figur 3 ist die erste numerische Ableitung 2 wiedergegeben, d. h. die Zahlenfolge Y'ᵢ von i mit i=(m+l)/2 bis n-(m+l)/2, wobei m hier gleich 21 ist. Weiterhin ist die zweite numerische Ableitung 3 aufgetragen, d. h. die Zahlenfolge Y"ᵢ mit i=(m+l+2)/2 bis n-(m+l+2)/2, wobei l hier gleich 31 ist. Das Maximum der numerischen zweiten Ableitung 3 gibt die X-Koordinate eines Kreuzes 10 vor, das in Figur 3 die Lage des Übergangsbereichs 6, d. h. des Knickpunkts der Hell-Dunkel-Grenze 1 anzeigt. Die Y-Koordinate des Kreuzes 10 wird durch die Hell-Dunkel-Grenze 1 selbst vorgegeben. In Figur 3 ist weiterhin ein Kreuz 16 eingezeichnet, das die Lage des Übergangsbereichs 6 anzeigt, welche nach einem herkömmlichen Verfahren aus dem Schnittpunkt von zwei beiderseits des Übergangsbereichs 6 an die Hell-Dunkel-Grenze 1 angepaßten Geraden bestimmt wurde. Beide Kreuze 10 und 16 fallen in Figur 3 nahezu zusammen. Dies ist angesichts des nahezu idealen Verlaufs der Hell-Dunkel-Grenze 1 auch kaum anders zu erwarten.

Figur 4 gibt dieselben Zahlenfolgen Y, Y' und Y" wie in Figur 3 wieder, nur daß die Hell-Dunkel-Grenze 1 diejenige eines anderen, realen KFZ-Scheinwerfers ist. Der Verlauf der Hell-Dunkel-Grenze 1 läßt bereits erkennen, daß das Anpassen von Geraden beiderseits des Übergangsbereichs 6 zur Ermittlung der genauen Lage des Übergangsbereichs 6 kritisch sein kann, weil die Bereiche 4 und 5 der Hell-Dunkel-Grenze 1 beiderseits des Übergangsbereichs 6 durchaus schwankende lokale Steigungen aufweisen. So liegt das Kreuz 16, das die konventionelle Ermittlung der Lage des Übergangsbereichs repräsentiert, auch nicht dort, wo es sein sollte. Umgekehrt ist die Lage des Kreuzes 10, die nach dem neuen Verfahren zur Festlegung der Lage des Übergangsbereichs 6 ermittelt wurde, in Bezug auf den tatsächlichen Verlauf der Hell-Dunkel-Grenze 1 voll nachvollziehbar und offensichtlich richtig.

Figur 5 bezieht sich auf denselben realen KFZ-Scheinwerfer wie Figur 4. Die in Figur 5 wiedergegebenen Zahlenfolgen Y' als erste Ableitung 2 und Y" als zweite Ableitung 3 unterscheiden sich von denjenigen gemäß Figur 4 nur durch den Umfang der Zahlen bzw, Steigungszahlen, für die jeweils die lineare Regression durchgeführt wurde. Konkret sind m und l bei dem Figur 5 zugrundeliegenden Verfahren auf 5 und 21 reduziert. Dennoch ist die Lage des Kreuzes 10 in Bezug auf die Hell-Dunkel-Grenze 1 noch einwandfrei. Figur 5 weist aber darauf hin, daß die Zahlen m und l nicht zu klein gewählt werden dürfen, damit eine ausreichende Glättung der Zahlenfolgen bis zur Ermittlung der zweiten Ableitung erfolgt ist.

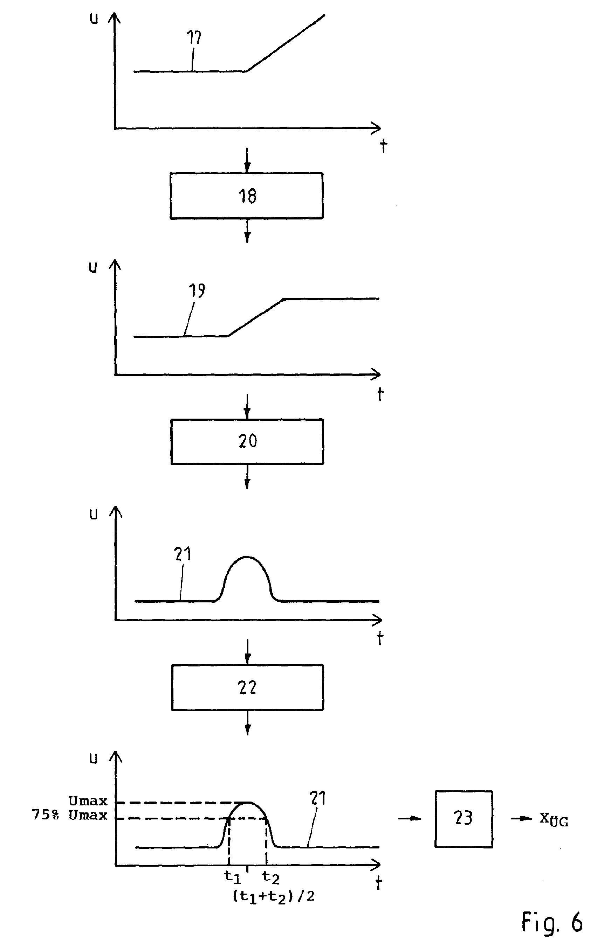

Figur 6 skizziert in Form eines Ablaufdiagramms eine weitere Ausführungsform des neuen Verfahrens. Es handelt sich um eine analoge Variante. Das heißt, ein analoges Eingangssignal 17, dessen Spannungsverlauf über der Zeit dem Verlauf der Y-Koordinate der Hell-Dunkel-Grenze 1 über ihrer X-Koordinate entspricht, wird mit Hilfe eines Differenzierglieds 18 in ein Zwischensignal 19 überführt. Das Differenzierglied 18 kann beispielsweise unter Verwendung eines Operationsverstärkers aufgebaut sein. Anschließend wird das Zwischensignal 19 mit einem weiteren Differenzierglied 20 in ein Ausgangssignal 21 überführt. Das Zwischensignal 19 entspricht dabei der ersten Ableitung, das Ausgangssignal 21 der zweiten Ableitung des Eingangssignals 17 nach der Zeit, einschließlich einer Signalglättung. Anschließend ermittelt eine Auswerteeinheit 22 die Lage des Maximums des Ausgangssignals 21 als Mittelwert der Zeitpunkte t₁ und t₂ zu denen das Ausgangssignal 21 erstmalig 75 % seines Maximalwerts Umax erreicht und anschließend nach Erreichen von Umax diesen Grenzwert erstmalig wieder unterschreitet. In einer Zuordneeinheit 23 wird dem Zeitpunkt (t₁+t₂)/2 dann die entsprechende X-Koordinate X_{ÜG} des gesuchten Übergangsbereichs zugeordnet. Das derart skizzierte Verfahren gemäß Figur 6 kann unter Verwendung einfacher und handelsüblicher elektronischer Bauteile durchgeführt werden. Erst ab der Auswerteeinheit 22 müssen dabei auch digitale Bauteile in Form von Zählern und dgl. vorgesehen werden.

### BEZUGSZEICHENLISTE

- 1 -: Hell-Dunkel-Grenze
- 2 -: erste Ableitung
- 3 -: zweite Ableitung
- 4 -: waagerechter Bereich
- 5 -: ansteigender Bereich
- 6 -: Übergangsbereich
- 7 -: Singularität
- 8 -: Steigung
- 9 -: Maximum
- 10 -: Kreuz

- 11 -: erster Schritt
- 12 -: zweiter Schritt
- 13 -: dritter Schritt
- 14 -: vierter Schritt
- 15 -: fünfter Schritt
- 16 -: Kreuz
- 17 -: Eingangssignal
- 18 -: Differenzierglied
- 19 -: Zwischensignal
- 20 -: Differenzierglied

- 21 -: Ausgangssignal
- 22 -: Auswerteeinheit
- 23 -: Zuordneeinheit

## Patentansprüche

1. Verfahren zur Festlegung der Lage eines Übergangsbereichs einer optischen Linie in einem Leuchtbild eines KFZ-Scheinwerfers, insbesondere der Lage eines Knick- oder Sprungpunkts einer Hell-Dunkel-Grenze, **dadurch gekennzeichnet, daß** eine vertikale Position der optischen Linie in dem Leuchtbild zweimal hintereinander nach ihrer horizontalen Position abgeleitet wird, wobei die optische Linie und/oder die erste Ableitung geglättet wird, und wobei die horizontale Position eines Maximums der zweiten Ableitung bestimmt und als horizontale Lage des Übergangsbereichs ausgegeben wird.

2. Verfahren nach Anspruch 1, **dadurch gekennzeichnet, daß** ein elektrisches Eingangssignal, dessen Spannungsverlauf über der Zeit dem Verlauf der vertikalen Position der optischen Linie über einer fortschreitenden horizontalen Position in dem Leuchtbild entspricht, mit analogen Differenziermitteln zweimal nach der Zeit abgeleitet wird, so daß sich ein Differenzsignal ergibt, dessen Spannungsverlauf über der Zeit dem Verlauf einer mittleren zweiten Ableitung der optischen Linie über einer fortschreitenden horizontalen Position in dem Leuchtbild entspricht, und daß die zeitliche Lage eines Maximums des Differenzsignals einer horizontalen Position dieses Maximums in dem Leuchtbild zugeordnet wird.

3. Verfahren nach Anspruch 1, **dadurch gekennzeichnet, daß** aus n Zahlen, die jeweils einer von n benachbarten horizontalen Positionen in dem Leuchtbild zugeordnet sind und deren Wert jeweils einer zu der horizontalen Position zugehörigen vertikalen Position der optischen Linie in dem Leuchtbild entspricht, n+1-m erste Steigungszahlen als mittlere Steigungen von jeweils m Zahlen, die benachbarten Positionen in dem Leuchtbild zugeordnet sind, ermittelt werden, daß aus den n+l-m ersten Steigungszahlen n+2-m-l zweite Steigungszahlen als mittlere Steigungen von jeweils l ersten Steigungszahlen, die benachbarten Positionen in dem Leuchtbild zugeordnet sind, ermittelt werden, daß die n+2-m-l zweiten Steigungszahlen zu n+2-m-l benachbarten horizontalen Positionen in dem Leuchtbild zugeordnet werden und daß eine zu einem Maximalwert der zweiten Steigungszahlen zugehörige horizontale Position in dem Leuchtbild ermittelt wird.

4. Verfahren nach Anspruch 3, **dadurch gekennzeichnet, daß** die Steigungszahlen durch lineare Regression ermittelt werden.

5. Verfahren nach Anspruch 3 oder 4, **dadurch gekennzeichnet, daß** die zweiten Steigungszahlen jeweils einer mittleren horizontalen Position in einer Gruppe von zugrundeliegenden Zahlen zugeordnet werden.

6. Verfahren nach Anspruch 5, **dadurch gekennzeichnet, daß** m und/oder l ungerade sind und daß m und l nicht größer als 15 % von n sind.

7. Verfahren nach einem der Ansprüche 3 bis 6, **dadurch gekennzeichnet, daß** zum Ermitteln einer ersten ersten Steigungszahl die m Zahlen, die m benachbarten Positionen an einem Rand des Leuchtbilds zugeordnet sind, in einen Ringbuffer mit m Plätzen eingelesen werden, und daß zur Ermittlung einer weiteren ersten Steigungszahl, deren zugehörige horizontale Position derjenigen der ersten ersten Steigungszahl benachbart ist, eine nächste Zahl neu in den Ringbuffer eingelesen und die damit herausfallende Zahl ausgelesen wird.

8. Verfahren nach einem der Ansprüche 3 bis 7, **dadurch gekennzeichnet, daß** zum Ermitteln einer ersten zweiten Steigungszahl die l ersten Steigungszahlen, die l benachbarten Positionen an einem Rand des Leuchtbilds zugeordnet sind, in einen Ringbuffer mit l Plätzen eingelesen werden, und daß zur Ermittlung einer weiteren zweiten Steigungszahl, deren zugehörige horizontale Position derjenigen der ersten zweiten Steigungszahl benachbart ist, eine nächste erste Steigungszahl neu in den Ringbuffer eingelesen und die damit herausfallende erste Steigungszahl ausgelesen wird.

9. Verfahren nach einem der Ansprüche 3 bis 8, **dadurch gekennzeichnet, daß** die zu dem Maximalwerts der zweiten Steigungszahlen zugehörige horizontale Position in dem Leuchtbild ermittelt wird, indem der absolute Maximalwert der zweiten Steigungszahlen ermittelt und dann um einen vorgegebenen Prozentsatz reduziert wird und indem die mittlere horizontale Position der beiden zweiten Steigungszahlen ermittelt wird, die in der Abfolge der zweiten Steigungszahlen den reduzierten Maximalwert aufeinanderfolgend über- und unterschreiten.

10. Verfahren nach einem der Ansprüche 3 bis 9, **dadurch gekennzeichnet, daß** bei mehreren lokalen Maximalwerten der zweiten Steigungszahlen immer die zu dem lokalen Maximalwert zugehörige horizontale Position ausgegeben wird, der entweder:
- bei einem KFZ-Scheinwerfer für den Rechtsverkehr am weitesten rechts bzw. bei einem KFZ-Scheinwerfer für den Linksverkehr am weitesten links liegt; oder
- der größte lokale Maximalwert ist; oder
- der am nächsten am hellsten Punkt des Leuchtbilds liegt.
